# EUROPEAN PATENT SPECIFICATION

(11) **EP 0 596 270 B1**
(45) Date of publication and mention of the grant of the patent: **04.03.1998**
(21) Application number: 93116156.6
(22) Date of filing: 06.10.1993
(51) Int. Cl.: B29C 45/57, B29C 45/38, B29C 45/40

(54) **Locally pressurizing type injection molding machine**
Spritzgiessmaschine vom örtlichen Druckbeaufschlagungstyp
Machine à mouler par injection du type à pressurisation locale

(30) Priority: 07.10.1992 JP 268554/92
(43) Date of publication of application: 11.05.1994
(73) Proprietor: SUMITOMO HEAVY INDUSTRIES, LTD, Tokyo 100 (JP)
(72) Inventor: Morikita, Nobuo, Yotsukaido-shi, Chiba 284 (JP)
(74) Representative: Boeters, Hans Dietrich, Dr.

(56) References cited:
- DE-A- 2 614 213
- DE-C- 3 232 893
- PATENT ABSTRACTS OF JAPAN vol. 13, no. 100 (M-805)(3448) 9 March 1989 & JP-A-63 288 724 (UBE IND. LTD.)

## Description

### BACKGROUND OF THE INVENTION

### FIELD OF THE INVENTION

The present invention relates to a locally pressurizing type injection molding machine.

### DESCRIPTION OF THE PRIOR ART

There are conventionally proposed locally pressurizing type injection molding machines in which various workings are applied to a molded product by pressurizing a local portion of a resin within a cavity, thereby eliminating the need for the boring of a thin plate, the finishing of a cut surface and the like.

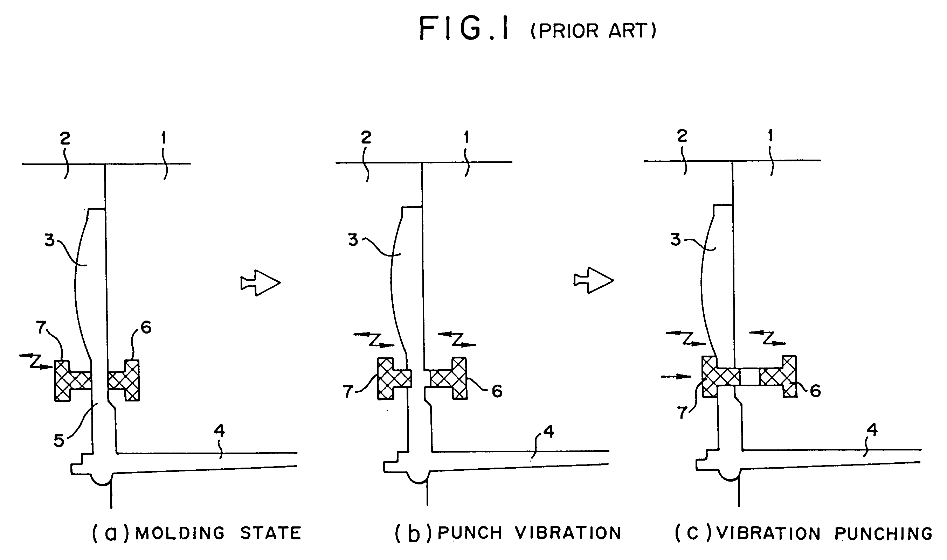

Fig. 1 is a view illustrating an essential portion of the prior art locally pressurizing type injection molding machine. Fig. 1(a) illustrates a molding state; Fig. 1(b) illustrates a punch vibrating state, and Fig. 1(c) illustrates a vibration punching state.

Referring to Fig. 1, the prior art locally pressurising type injection molding machine comprises a stationary die 1 mounted to a stationary platen, a movable die 2 mounted to a movable platen which is not shown, a cavity 3 defined between the stationary and movable dies 1 and 2, a sprue 4 to which a resin injected from an injection nozzle which is not shown, a gate 5 defined between the sprue 4 and the cavity 3, a stationary punch 6 disposed on the stationary die 1, and a movable punch 7 disposed on the movable die 2.

The stationary and movable punches 6 and 7 are vibrated by vibrating devices (not shown) disposed within the stationary and movable dies 1 and 2, respectively, at a cooling step after the completion of a pressure maintaining step in an injection molding cycle. The stationary and movable punches 6 and 7 are previously disposed at locations where a working is applied and hence, as shown in Fig. 1(a), a heat due to a shear stress is generated in such a working portion (e.g., a boring portion or a gate 5) between the stationary and movable punches 6 and 7 by vibration of the movable punch 7, thereby softening a resin.

In this state, if for example, the movable punch 7 is pushed out in one direction, as shown in Fig. 1(b), while vibrating the stationary and movable punches 6 and 7, the softened resin is cut, as shown in Fig. 1(c). In this case, a portion cut along the movable punch 7 is finished and cooled by the vibration, thereby providing a glossy worked surface of a high accuracy.

In the above prior art locally pressurizing type injection molding machine, however, a molded product, after being molded, is ejected from the movable die 2 by an ejector device which is not shown, but it is necessary to dispose an actuator or actuators for the stationary and movable punches 6 and 7 in addition to the ejector device, resulting in a complication in structure and an increase in size of the injection molding machine.

JP-A-63 288724 discloses a locally pressurizing type injection molding machine according to the preamble of claim 1, wherein molten resin material is poured from a cylinder barrel through a sprue, a runner and a gate in the cavity of a mold. After the pouring of the resin material, the gate port of the cavity is throttled or cut off by advancing an ejector plate and a gate cutting pin through an ejector pin, which is driven with a driving ejector plate advanced through the forward driving of the rod of a cylinder. When the force applied to the ejector plate is released the ejector plate and the gate cutting pin are pushed back in the retreating direction by energizing force of a spring. Together with said retreating movement, the ejector pin is also moved in retreat, resulting in starting mold opening.

In the above described injection molding machine the ejector plate and the vibrating/pressurizing plate are connected by a spring. Therefore, an advancement of the vibrating/pressurizing plate by the driving ejector plate through the ejector pins necessarily generates a force onto the ejector plate through said spring. Therefore, the ejector plate moves with the movement of the vibrating/pressurizing plate so that the ejector plate must be fixed in space by a pin mechanism. Because of this spring connection a vibrating mold of the vibrating/pressurizing plate is not possible because this would vibrate the ejector plate in turn, which is highly undesirable.

It is therefore an object of the present invention to provide an injection molding machine wherein the vibration/pressurization and the ejection is done by a simple configuration and the vibrating motion does not influence the ejection mold.

This object is solved by the features of present claim 1. Preferred embodiments are subject of the dependent claims.

According to the present invention, there is provided a locally pressurizing type injection molding machine comprising a stationary die, a movable die disposed for movement into and out of contact with said stationary die to define a cavity between both the dies, an ejector pin disposed to extend through said movable die and having a tip end facing to said cavity, an ejector plate for fixing a trailing end of said ejector pin, a vibrating/pressurizing pin disposed to extend through said movable die and said ejector plate and having a tip end advanceably and retreatably facing into a reson passage in correspondence to a molded product portion to be worked, a vibrating/pressurizing plate which fixes a trailing end of said vibrating/pressurizing pin, and a vibrating/pressurizing actuator disposed in rear of said vibrating/pressurizing plate, wherein said vibrating/pressurizing plate selectively urges said ejector plate, said vibrating/pressurizing actuator causes said vibrating/pressurizing plate to be advanced with vibration at a vibrating step and for causing said ejector plate to be advanced by said vibrating/pressurizing plate without vibration at an ejection step.

With the above construction, the vibrating/pressurizing pin can be advanced through the vibrating/pressurizing plate, and the ejector pin can be advanced through the vibrating/pressurizing plate and the ejector plate, both by operation of the vibrating/pressurizing actuator.

In addition, the need for a hydraulic cylinder for actuating the ejector pin is eliminated, leading to a simplified structure and a reduced size of the injection molding machine.

Further, a vibrating spring for biasing the vibrating/pressurizing plate in a returning direction may be disposed, thereby ensuring that when the ejection of the molded product by the ejector pin has been completed, the vibrating/pressurizing plate can be returned to its initial position at an ejection step.

Yet further, a floating sleeve may be slidably disposed to extend through the movable die, and the vibrating spring may be disposed between the vibrating/pressurizing plate and the floating sleeve.

Further features of the invention are defined in the dependent claims.

The above and other objects, features and advantages of the invention will become apparent from a consideration of the following description of the preferred embodiment taken in conjunction with the accompanying drawings.

### BRIEF DESCRIPTION OF THE DRAWINGS

Fig. 1 is a view illustrating an essential portion of a prior art locally pressurizing type injection molding machine;
Fig. 2 is a sectional view of a locally pressurizing type injection molding machine according to a preferred embodiment of the present invention;

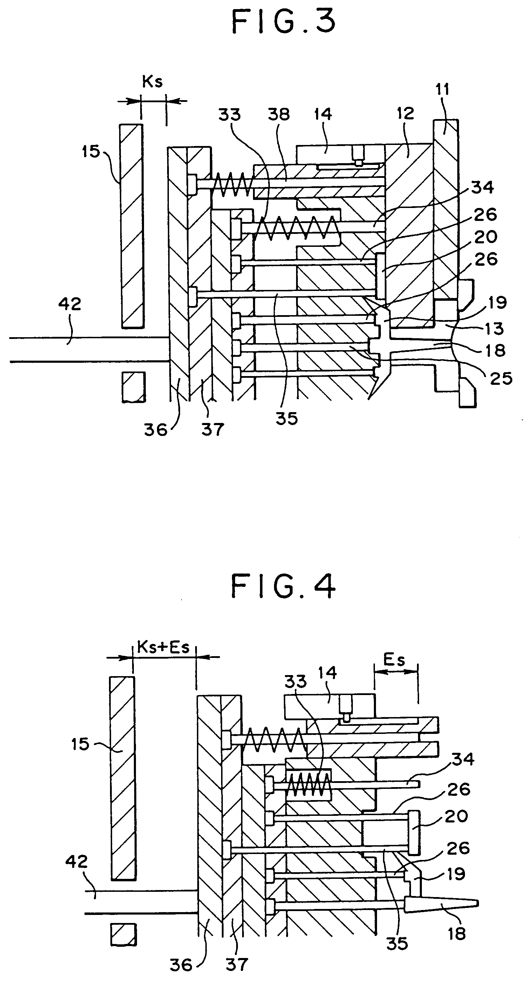

Fig. 3 is a view illustrating the injection molding machine shown in Fig. 2 in a condition in which a pressurizing step has been completed;
Fig. 4 is a view illustrating the injection molding machine in a condition in which an ejecting step has been completed;
Fig. 5 is a time chart for the injection molding machine shown in Fig. 2.

### DESCRIPTION OF PREFERRED EMBODIMENTS

The present invention will now be described by way of a preferred embodiment in connection with the accompanying drawings.

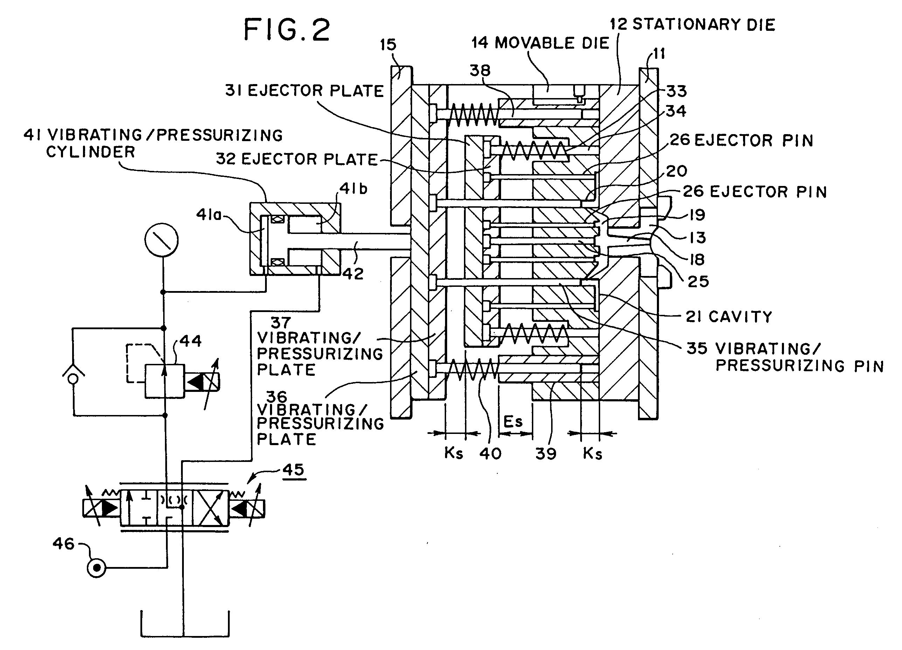

Referring to Fig. 2, a locally pressurizing type injection molding machine according to the preferred embodiment of the present invention comprises a stationary die plate 11, and a stationary die 12 mounted to a stationary platen (not shown) with the stationary die plate 11 interposed therebetween. An injection device which is not shown is adapted to advance at an injection step, so that a tip end of an injection nozzle is brought into contact with a spool bush 13 of the stationary die 12.

On the other hand, a movable platen is adapted to be advanced and retreated (i. e., moved laterally as viewed in Fig. 2) by a die opening and closing device (not shown), so that the movable die 14 is brought into and out of contact with the stationary die 12. To this end, the movable die 14 is mounted to the movable platen through a movable die plate 15 and a spacer block which is not shown.

A resin injected from the injection nozzle is passed from a sprue 18 through a runner 19 and via a submarine gate 20 into a cavity 21 defined between the stationary and movable dies 12 and 14.

The completion of the injection step is followed by a pressure maintaining step at which the pressure on the resin within the cavity 21 is maintained and at the same time, the cooling of the resin is started. After a lapse of a given time, both the dies 12 and 14 are opened with a molded product (not shown) left on the movable die 13, and the molded product is ejected down by an ejector.

For this purpose, a sprue lock pin 25 and an ejector pin 26 are disposed. The sprue lock pin 25 is disposed in an opposed relation to the sprue 18 and adapted to retain the molded product and leave it on the movable die 14 during opening of the dies. The ejector pin 26 is disposed with its tip end facing the cavity 21, the runner 19 and the like and adapted to separate and eject the molded product down from the movable die 14 after opening of the dies.

Head portions formed at trailing ends of the sprue lock pin 25 and the ejector pin 26 are clamped and fixed by ejector plates 31 and 32. The ejector plates 31 and 32 are advanceably and retreatably supported and adapted to advance the sprue lock pin 25 and the ejector pin 26 with the advancement thereof.

It is to be noted that reference numeral 33 is a return spring disposed to retreat the ejector pin 26, and reference numeral 34 is a return pin for guiding the ejector plates 31 and 32. As shown in Fig. 2, a gap Es is defined between the ejector plate 32 and a trailing end face of the movable die 14 at a retreat limit of the ejector pin 26. The gap Es corresponds to a stroke of the ejector pin 26.

In order to apply a working to the molded product and enhance the quality of the molded product, a vibrating/pressurizing pin 35 is disposed. The vibrating/pressurizing pin 35 extends forwardly (i.e., rightwardly as viewed in Fig. 2) through the ejector plates 31 and 32, and is disposed to face the cavity 21 so as to apply a working to the molded product, or to face the gate 20 so as to gate-cut the molded product.

A head portion formed at a trailing end of the vibrating/pressurizi ng pin 35 is clamped and fixed by vibrating/pressurizing plates 36 and 37.

The vibrating/pressurizing plates 36 and 37 are advanced and retreated by a vibrating/pressurizing cylinder 41 functioning as a vibrating/pressurizing actuator. The vibrating/pressurizing cylinder 41 has a piston rod 42 which extends through the movable die plate 15 to abut against the vibrating/pressurizing plate 36, so that the vibrating/pressurizing pin 35 can be vibrated and advanced by operating the vibrating/pressurizing cylinder 41.

When the ejection of the sprue lock pin 25 and the ejector pin 26 has been completed, the closing and clamping of the dies are conducted again, and during the clamping of the dies, a floating sleeve 39 is pushed back by the stationary die 12. As a result, the vibrating spring 40 biases the vibrating/pressurizing plate 36 again in a returning direction back to an initial position at the ejection step.

It should be noted that in addition to the vibrating/pressurizing cylinder 41, an AC servo motor or a DC servo motor can be used as the vibrating/pressuring actuator.

The ejector plates 31 and 32 are disposed in front of the vibrating/pressuring plates 36 and 37 to define a gap Ks therebetween at a retreat limit of the ejector plates 31 and 32 and at a retreat limit of the vibrating/pressuring plates 36 and 37. A plurality of stroke limiting rods 38 are disposed on the vibrating/pressuring plates 36 and 37 at point-symmetric locations with respect to the sprue lock pin 25 and define a gas Ks between the surface of the stationary die 12 in a die-clamped state. The gap Ks corresponds to an effective stroke of the vibrating/pressurising pin 35.

The floating sleeve 39 is slidably disposed to extend through the movable die 14, and the stroke limiting rod 38 is further slidably disposed within the floating sleeve 39. The vibrating spring 40 is disposed between the floating sleeve 39 and the vibrating/pressurizing plate 37.

The vibrating spring 40 is adapted to apply a force to the vibrating/pressurizing plates 36 and 37 in a direction to bias them back and has a spring constant which is set at a value such that the vibrating/pressurizing plates 36 and 37 can be vibrated at a predetermined frequency of vibration without juddering. The vibrating spring 40 is also adapted to generate a spring force only during the clamping of the dies, and during the opening of the dies, the spring force is released by pushing-out of the floating sleeve 39 from a parting line.

Therefore, at a vibrating step and at a pressurizing step, the vibrating/pressurizing plates 36 and 37 are advanced against the spring force of the vibrating spring 40, and at the ejection step, front end faces of the vibrating/pressurizing plates 36 and 37 are brought into contact with a trailing end face of the ejector plates 31 and 32, and the vibrating/pressurizing plates 36 and 37 and the ejector plates 31 and 32 are advanced against the spring force of the return spring 33. At this time, the floating sleeve 39 is pushed out from the parting line and hence, the spring force of the vibrating spring 40 is released.

The spring constant of the vibrating spring 40 is large and hence, when the vibrating/pressurizing plates 36 and 37 are intended to be advanced to urge the ejector plates 31 and 32, they cannot oppose the biasing force of the vibrating spring 40. However, because the floating sleeve 39 is slidably disposed within the movable die 14, the floating sleeve 39 is pushed out from the parting line simultaneously with starting of the opening of the dies, so that the spring force of the vibrating spring 40 is released. Therefore, at the ejection step, it is only required to advance the vibrating plates 36 and 37 and the ejector plates 31 and 32 against the spring force of the return spring 33.

In order to vibrate and advance the vibrating/pressurizing plates 36 and 37 and to advance the sprue lock pin 25 and the ejector pin 26, a solenoid proportional reduction valve 44 and a solenoid proportional flow control valve 45 are disposed. In this case, a pulse-like hydraulic pressure or a preset hydraulic pressure can be supplied to an oil chamber 41a in the vibrating/pressurizing cylinder 41 by electrically controlling an oil discharged from a pump 46 by the solenoid proportional reduction valve 44 and the solenoid proportional flow control valve 45.

At the vibrating step, the pulse-like hydraulic pressure causes the vibrating/pressurizing pin 35 to be gradually advanced while being vibrated, thereby vibrating the resin at a portion of the molded product which is to be worked, thus applying a predetermined working. In addition, at the pressurizing step, the preset hydraulic pressure allows the vibrating/pressurizing pin 35 to be located at its advance limit position, and acts to maintain the pressure on the resin within the cavity 21. Further, at the ejection step, the preset hydraulic pressure allows the vibrating/pressurizing pin 35 to be advanced, and also allows the sprue lock pin 25 and the ejector pin 26 to be advanced.

It should be noted that an oil chamber 41b in the vibrating/pressur izing cylinder 41 serves to retreat the vibrating/pressurizing pin 35, the sprue lock pin 25 and the ejector pin 26 to their initial positions.

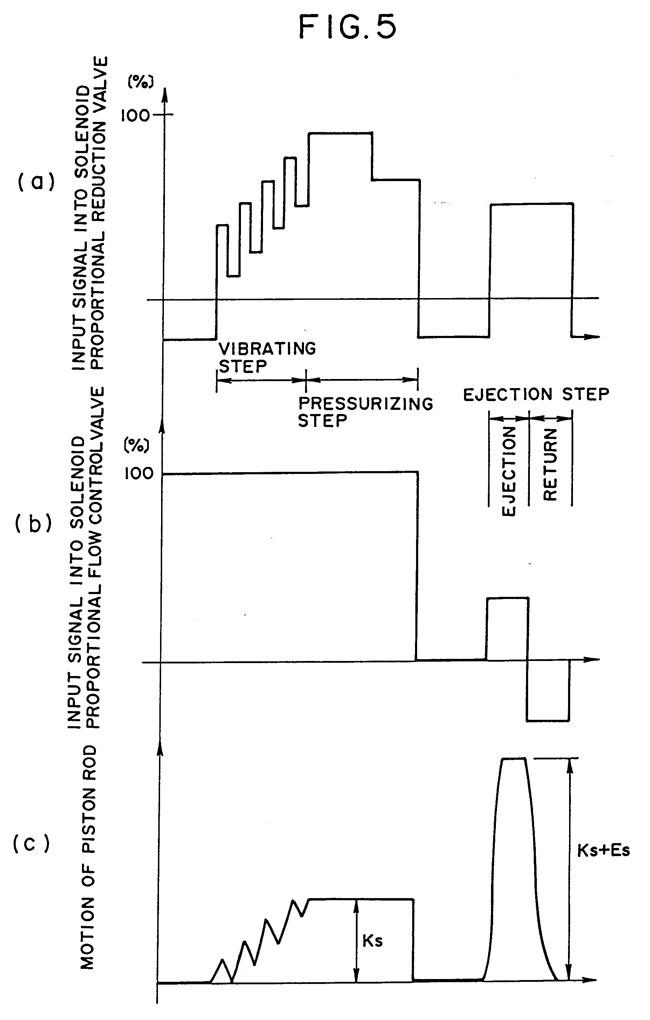

Fig. 5 is a time chart for the locally pressurizing type injection molding machine according to the present invention. Fig. 5(a) corresponds to a time chart for an input signal into the solenoid proportional reduction valve 44 (Fig. 2); Fig. 5(b) corresponds to corresponds to a time chart for an input signal into the solenoid proportional flow control valve 45, and Fig. 5(c) corresponds to a time chart for the motion of the piston rod 42.

The control of the vibrating and pressurization can be carried out by the solenoid proportional reduction valve 44, and a pulse-like hydraulic pressure totally increased while being increased and decreased as shown in Fig. 5(a) is generated at the vibrating step. In this case, each of the vibration frequency and the increasing and decreasing tendency of the hydraulic pressure can be set at any level. At the pressurization step, a given hydraulic pressure stepwise decreased as shown in Fig. 5(a) is generated. Even in this case, the increasing and decreasing tendency can be set at any level.

Further, at the ejection step, the solenoid proportional reduction valve 44 generates a given hydraulic pressure upon the ejection and returning of the sprue lock pin 25 and the ejection pill 26.

In the locally pressurizing type injection molding machine having the above-described construction, the vibrating step is started at any timing during the injection step. The frequency of vibration at this time is on the order of several to 10 hertz and controlled in a programmed manner such that it is increased while being increased and decreased and finally becomes a constant. In some cases, the pressurizing step can be conducted with the vibrating step being eliminated.

At the pressurizing step, the positions of the vibrating/pressurizi ng plates 36 and 37 is determined by a thrust of the vibrating/pressuriz ing pin 35 provided by the hydraulic pressure controlled by the solenoid proportional reduction valve 44, a reaction force provided by the `vibrating spring 40 and a valance of the pressure on the resin within the cavity 21.

In other words, the position of the vibrating/pressurizing pin 35 can be controlled by controlling the hydraulic pressure. The displacement and vibrational amplitude of the vibrating/pressurizing pin 35 call be also controlled by the increasing and decreasing hydraulic pressure, so that the working can be applied to the molded product in resin passages such as the runner 19, the gate 20, the cavity 21 and the like. In this case, the molded product is gate-cut.

Even if the hydraulic pressure within the oil chamber 41a is increased more than necessary at the pressurizing step, the vibrating/pressurizing pin 35 cannot be advanced in excess of the effective stroke (= Ks), because the stroke limiting rod 38 abuts against the trailing end face of the stationary die 12.

When the opening of the dies is then conducted, the floating sleeve 39 is pushed out from the parting line by the action of the vibrating spring 40, which is attended by the releasing of the spring force of the vibrating spring 40.

The speed of the vibrating/pressurizing cylinder 41 after opening of the dies is controlled by the solenoid proportional flow control valve 45, so that the piston rod 42 is further advanced, thereby causing the sprue lock pin 25 and the ejector pin 26 to be ejected. Thus, the piston rod 42 is advanced by a value of the gap Es plus the gap Ks.

## Claims

1. A locally pressurizing type injection molding machine comprising
a stationary die (12),
a movable die (14) disposed for movement into and out of contact with said stationary die (12) to define a cavity (21) between both the dies,
an ejector pin (26) disposed to extend through said movable die (14) and having a tip end facing to said cavity (21),
an ejector plate (31) for fixing a trailing end of said ejector pin (26),
a vibrating/pressurizing pin (35) disposed to extend through said movable die (14) and said ejector plate (31) and having a tip end advanceably and retreatably facing into a reson passage (20) in correspondence to a molded product portion to be worked,
a vibrating/pressurizing plate (36, 37) which fixes a trailing end of said vibrating/pressurizing pin (35), and
a vibrating/pressurizing actuator (41, 42) disposed in rear of said vibrating/pressurizing plate (36, 37),
**characterized in that**
said vibrating/pressurizing plate (36, 37) selectively urges said ejector plate (31),
said vibrating/pressurizing actuator (41, 42) causes said vibrating/pressurizing plate (36, 37) to be advanced with vibration at a vibrating step and for causing said ejector plate (31) to be advanced by said vibrating/pressurizing plate (36, 37) without vibration at an ejection step.

2. A locally pressurizing type injection molding machine according to claim 1, further including a vibrating spring for biasing said vibrating/pressurizing plate in a returning direction.

3. A locally pressurizing type injection molding machine according to claim 2, further including a floating sleeve slidably disposed to extend said movable die, and wherein said vibrating spring is disposed between said vibrating/pressurizing plate and said floating sleeve.

## Patentansprüche

1. Eine lokal druckerzeugende Spritzgußmaschine, die aufweist:
einen stationären Stempel (12),
einen beweglichen Stempel (14), der in Kontakt mit dem stationären Stempel (12) gebracht und von ihm gelöst wird, um einen Hohlraum (21) zwischen den beiden Stempeln zu definieren,
einen Auswurfstift (26), der sich durch den beweglichen Stempel (14) erstreckt und dessen vorderer Spitze dem Hohlraum (21) gegenübersteht,
eine Auswurfplatte (31) zum Befestigen eines rückwärtigen Endes des Auswurfstifts (26),
einen vibrierenden/druckerzeugenden Stift (35), der sich durch den beweglichen Stempel (14) und die Auswurfplatte (31) erstreckt, und der ein vorderes Ende aufweist, das gegenüber einer Harzpassage (20) entsprechend einem zu bearbeitenden gegossenen Produktabschnitt vorwärts und rückwärts bewegbar steht,
eine vibrierende/druckerzeugende Platte (36, 37), die ein hinteres Endes des vibrierenden/druckerzeugenden Stiftes (35) fixiert, und
ein vibrierendes/druckerzeugendes Stellglied (41, 42), das hinter der vibrierenden/druckerzeugenden Platte (36, 37) angeordnet ist,
**dadurch gekennzeichnet**, daß
die vibrierende/druckerzeugende Platte (36, 37) selektiv die Auswurfplatte (31) drückt,
wobei das vibrierende/druckerzeugende Stellglied (41, 42) bewirkt, daß die vibrierende/druckerzeugende Platte (36, 37) mit einer Vibration bei einem Vibrationsschritt vorwärtsbewegt wird, und bewirkt, daß die Auswurfplatte (31) durch die vibrierende/druckerzeugende Platte (36, 37) ohne Vibration bei einem Auswurfschritt vorwärtsbewegt wird.

2. Eine lokal druckerzeugende Spritzgußmaschine gemäß Anspruch 1, die weiter eine vibrierende Feder zum Vorbelasten der vibrierenden/druckerzeugenden Platte in einer rückwärtigen Richtung aufweist.

3. Eine lokal druckerzeugende Spritzgußmaschine gemäß Anspruch 2, die weiter eine schwimmende Buchse aufweist, die gleitbar angeordnet ist, um den beweglichen Stempel zu erweitern, und wobei die vibrierende Feder zwischen der vibrierenden/druckerzeugenden Platte und der schwimmenden Buchse angeordnet ist.

## Revendications

1. Machine de moulage par injection du type à application locale de pression comprenant
un moule fixe (12),
un moule mobile (14) disposé en vue de se déplacer pour venir en contact avec ledit moule fixe (12) et à cesser d'être en contact avec ce dernier de manière à définir une cavité (21) entre les deux moules,
une broche (26) d'éjecteur disposée de manière à s'étendre à travers ledit moule mobile (14) et comportant une extrémité en regard de ladite cavité (21);
une plaque (31) d'éjecteur destinée à fixer une extrémité arrière de ladite broche (26) d'éjecteur,
une broche (35) de vibration/application de pression disposée de manière à s'étendre à travers ledit moule mobile (14) et ladite plaque (31) d'éjecteur et comportant une extrémité située en regard d'un passage (20) de résine, pour pénétrer dans ce dernier et pour en sortir en correspondance avec une partie de produit moulé devant être façonnée
une plaque (36, 37) de vibration/application de pression qui fixe une extrémité arrière de ladite broche (35) de vibration/application de pression, et
un actionneur (41, 42) de vibration/application de pression disposé en arrière de ladite plaque (36, 37) de vibration/application de pression,
caractérisée en ce que
ladite plaque (36, 37) de vibration/application de pression pousse de façon sélective ladite plaque (31) d'éjecteur,
ledit actionneur (41, 42) de vibration/application de pression fait avancer ladite plaque (36, 37) de vibration/application de pression avec génération de vibration au cours de l'étape de vibration pour faire avancer la plaque (31) d'éjecteur par ladite plaque (36, 37) de vibration/application de pression sans génération de vibration au cours de l'étape d'éjection.

2. Machine de moulage par injection du type à application locale de pression selon la revendication 1, comprenant, en outre, un ressort de vibration pour solliciter ladite plaque de vibration/application de pression dans une direction de rappel.

3. Machine de moulage par injection du type à application de pression locale selon la revendication 2, comprenant, en outre, un manchon flottant disposé de façon coulissante de manière à prolonger ledit moule mobile, et dans laquelle ledit ressort de vibration est disposé entre ladite plaque de vibration/application de pression et ledit manchon flottant.
